# EUROPEAN PATENT APPLICATION

(11) **EP 4 201 946 A1**
(43) Date of publication of application: **28.06.2023**
(21) Application number: 21217006.2
(22) Date of filing: 22.12.2021
(51) Int. Cl.: C07G 1/00, C08H 7/00, C08L 97/00

(54) **LIGNIN CROSSLINKED WITH TRIGLYCERIDE**

(71) Applicant: Ren Fuel K2B AB, 102 48 Stockholm (SE)
(72) Inventor: OREBOM, Alexander, 757 55 UPPSALA (SE); PIERROU, Clara, 752 40 UPPSALA (SE)
(74) Representative: Brann AB

(57) **Abstract**

A material derived from functionalized lignin and triglyceride is provided where the material is crosslinked with a sulphur containing vulcanization agent. The material may have elastomeric properties.

## Description

### FIELD OF INVENTION

The present invention relates to a renewable material comprising functionalized lignin crosslinked with triglyceride comprising unsaturated fatty acid and the use of the material. The invention also relates to a method of preparing a material of crosslinked lignin.

### BACKGROUND

There is a need for more renewable plastic materials and lignin is a potential polymer to be used. However, a problem with lignin is its lack of miscibility and compatibility with other polymers such as polyolefins.

Lignin is the most available natural polymer next to cellulose. Lignin is found in the cell walls of fibrous plants and woods along with cellulose and hemicellulose. Lignin acts as a matrix material for polysaccharides, micro-fibrils and fibres and provides strength to plant stem. It is a high molecular weight phenolic macromolecule containing three different types of monolignol monomers p-coumaryl alcohol, coniferyl alcohol and sinapyl alcohol.

WO2015/168571 discloses functionalized lignin that may be used in thermoplastics. The lignin is functionalized during reactive extraction using for example ethanol and an acid.

WO2013/050661 relates to lignin esterified with fatty acid for the production of films with improved barrier properties against oxygen and vapour. The lignin is esterified with tall oil fatty acid using acid chloride and films were made from solutions of the esterified lignin and applied to paperboard.

There is still a need for renewable cured or crosslinked polymeric materials such as thermosets and elastomers with good mechanical properties.

### SUMMARY OF INVENTION

The object of the present invention is to overcome the drawbacks of prior art and to provide a solid material of crosslinked lignin where the lignin is crosslinked with a crosslinking compound derived from unsaturated fatty acid. The present invention facilitates the production of fully renewable, environmentally friendly crosslinked lignin material and even elastomers. Furthermore, the present invention makes it possible to adapt the mechanical properties of the obtained material by adjusting the ratio of saturated, mono- and polyunsaturated fatty acids of the functionalized lignin and also of the triglycerides.

In a first aspect the present invention relates to a material as defined in Claim 1.

In a second aspect the present invention relates to a method of preparing a material comprising:
a) Providing functionalized lignin wherein the lignin is functionalized with unsaturated fatty acids via a linker group;
b) Providing triglyceride and a sulphur containing vulcanization compound;
c) Mixing the functionalized lignin, triglyceride and the sulphur containing vulcanization compound to obtain a mixture;
d) Optionally arranging the mixture in a mould or a die or on a surface; and
e) Heating the mixture at a curing temperature.

In a third aspect the present invention relates to a composite material comprising the material according to the present invention and fibres or particles.

In a fourth aspect the present invention relates to a composition for preparing the material according to the present invention wherein the composition comprises functionalized lignin, triglyceride and a sulphur containing vulcanization compound, wherein the lignin is at least partly functionalized with unsaturated fatty acids via a linker group and wherein at least a part of the fatty acids of the triglyceride are unsaturated.

In a fifth aspect the present invention relates to the use of the material according to the present invention as or in a gasket, particle board, fibre composite, varnish, coating, tire, packaging, panel, insulation, adhesive, sealant, sole, cement or asphalt

### SPECIFIC EMBODIMENTS OF THE INVENTION

In one embodiment of any of the aspects the material comprises crosslinks between unsaturated fatty acids of the functionalized lignin, the triglyceride and/or free unsaturated fatty acids via a sulphide chain wherein said chain comprises one or more sulphur atom

In one embodiment of any of the aspects the material comprises crosslinks between unsaturated fatty acids of the functionalized lignin, between unsaturated fatty acids of the triglyceride and/or between unsaturated fatty acids of the functionalized lignin and unsaturated fatty acids of the triglyceride via a sulphide chain wherein said chain comprises one or more sulphur atom.

In another embodiment of any of the aspects at least 20% of the fatty acids of the triglyceride is unsaturated fatty acids, preferably at least 30%, preferably at least 40%, more preferably at least 50%, more preferably at least 60%, and preferably at least 30% of the unsaturated fatty acids of the triglyceride are polyunsaturated fatty acids, more preferably at least 40%, more preferably at least 50%.

In another embodiment of any of the aspects the lignin is at least partly functionalized with unsaturated fatty acids and wherein at least a part of the unsaturated fatty acids are polyunsaturated, preferably at least 30% of the unsaturated fatty acids are polyunsaturated, more preferably at least 40%, more preferably at least 50%, more preferably at least 60%, more preferably at least 80%, more preferably about 100%.

In another embodiment of any of the aspects the lignin is at least partly functionalized with unsaturated fatty acids and wherein at least a part of the unsaturated fatty acids are polyunsaturated, preferably at least 30% of the unsaturated fatty acids are polyunsaturated, more preferably at least 40%, more preferably at least 50%, more preferably at least 60%, more preferably at least 80%, more preferably about 100% and wherein the material comprises free fatty acids and wherein the amount of free fatty acids in the material is 0.1-25wt%, preferably 1-20wt%.

In another embodiment of any of the aspects of the present invention the material comprises free fatty acids and wherein the amount of free fatty acids in the material is 0.1-25wt%, preferably 1wt% or more, more preferably 5wt% or more, more preferably 10wt% or more, but preferably 25wt% or less, more preferably 20wt% or less; and preferably wherein at least 30% of the free fatty acids are unsaturated fatty acids, more preferably at least 40%.

In another embodiment of any of the aspects of the present invention the functionalized lignin comprises free fatty acids and wherein the amount of free fatty acids in the functionalized lignin is 0.1-30wt%, preferably 1wt% or more, more preferably 5wt% or more, more preferably 10wt% or more, but preferably 25wt% or less, more preferably 20wt% or less; and preferably wherein at least 30% of the free fatty acids are unsaturated fatty acids, more preferably at least 40%.

In another embodiment of any of the aspects the triglyceride is derived from one or more, or two or more of linseed oil, brazil nut oil, rapeseed oil, palm oil, palm kernel oil, coconut oil, carinata oil, cotton seed oil, olive oil, butter, peanut oil, safflower oil, soybean oil, corn oil, tall oil, sunflower oil, canola oil, avocado oil, used cooking oil or animal or fish fat such as tallow, schmaltz or lard or fish oil, or soap stock, acidulated soap stock, or fat from microorganisms such as bacteria and algae.

In another embodiment of any of the aspects the weight ratio between the functionalized lignin and the triglyceride is 40-95:60-5, preferably 45-85:55-15, more preferably 55-80:45-20.

In another embodiment of any of the aspects at least 70 weight% of the material constitutes of functionalized lignin and triglyceride, preferably at least 80weight%, more preferably at least 90weight%, more preferably at least 95 weight%, or about 100 weight%.

In another embodiment of any of the aspects the sulphur containing vulcanization compound is selected from elementary sulphur, tetramethylthiuram disulfide, N-oxydiethylene-N'-oxydiethylenethiocarbamylsulfonamide, dipentamethylenethiuramtetrasulfide, 2-morpholinodithiobenzothiazole, dithiomorpholine, capralactam disulfide or alkyl phenol disulfide or a combination of two or more of the sulphur containing vulcanization compounds and wherein the amount of sulphur containing vulcanization compound preferably is 0.1-20wt%, preferably, 0.5-15wt%, more preferably 1-10wt% of the total weight of functionalized lignin, triglyceride and sulphur containing vulcanization compound.

In another embodiment of any of the aspects fibres or particles are mixed with the functionalized lignin prior to heating the functionalized lignin at the curing temperature, wherein the fibres are preferably selected from wood fibres, cellulose fibres, polyester fibres, cotton fibres, glass fibre or carbon fibre or a mixture thereof and wherein the particles are preferably wood particles, and wherein the amount of fibres is preferably at least 5wt%, preferably at least 20wt%, preferably at least 40wt%, more preferably at least 60wt%, more preferably at least 80wt% but preferably less than 95wt%, more preferably less than 85wt%or wherein the amount of particles is preferably at least 50wt%, preferably at least 60wt%, preferably at least 70wt%, more preferably at least 80wt%, but preferably less than 99wt%, more preferably less than 95wt%.

In another embodiment of any of the aspects the triglyceride is derived from one or more, or two or more of linseed oil, brazil nut oil, rapeseed oil, palm oil, palm kernel oil, coconut oil, carinata oil, cotton seed oil, olive oil, butter, peanut oil, safflower oil, soybean oil, corn oil, tall oil, sunflower oil, canola oil, avocado oil, used cooking oil or animal or fish fat such as tallow, schmaltz or lard or fish oil, or soap stock, acidulated soap stock, or fat from microorganisms such as bacteria and algae.

In another embodiment of any of the aspects the triglyceride is a mixture of triglycerides prepared by mixing two or more triglycerides derived from linseed oil, brazil nut oil, rapeseed oil, palm oil, palm kernel oil, coconut oil, carinata oil, cotton seed oil, olive oil, butter, peanut oil, safflower oil, soybean oil, corn oil, tall oil, sunflower oil, canola oil, avocado oil, used cooking oil or animal or fish fat such as tallow, schmaltz or lard or fish oil, or soap stock, acidulated soap stock, or fat from microorganisms such as bacteria and algae in order to obtain a mixture of triglyceride wherein at least 20% of the fatty acids of the mixture of triglycerides are unsaturated fatty acids, preferably at least 40%, more preferably at least 50%, more preferably at least 60% and preferably at least 30% of the fatty acids of the triglyceride are polyunsaturated fatty acids, more preferably at least 40%, more preferably at least 50%.

In another embodiment of any of the aspects the lignin is at least partly functionalized with unsaturated fatty acids via a linker group wherein said linker group is an ester between hydroxyl groups of the lignin and the unsaturated fatty acids and wherein 35-100% of the hydroxyl groups of the lignin have been converted to ester groups, preferably 40% or more, preferably 45% or more, preferably 50% or more, more preferably 55% or more, more preferably 60% or more, more preferably 65% or more, but 100% or less, preferably 90% or less, or more preferably 80% or less; and preferably wherein at least 30% of the unsaturated fatty acids are polyunsaturated, more preferably at least 40%, more preferably at least 50%, more preferably at least 60%, more preferably at least 80%, more preferably about 100%.

In another embodiment of any of the aspects 10% or more of the hydroxyl groups of the lignin are acetylated, preferably 20% or more, but 60% or less, preferably 55% or less, more preferably 45% or less, more preferably 35% or less.

In another embodiment of any of the aspects the fibres are wood fibres, cellulose fibres, polyester fibres, cotton fibres, glass fibre or carbon fibre or a mixture thereof, and wherein the particles are wood particles.

In another embodiment of any of the aspects the amount of fibres is preferably at least 5wt%, preferably at least 20wt%, preferably at least 40wt%, more preferably at least 60wt%, more preferably at least 80wt% but preferably less than 95wt%, more preferably less than 85wt%or wherein the amount of particles is preferably at least 50wt%, preferably at least 60wt%, preferably at least 70wt%, more preferably at least 80wt%, but preferably less than 99wt%, more preferably less than 95wt%.

In another embodiment of any of the aspects the curing temperature is 120-200°C, preferably 140-190°C, more preferably 160-180°C.

In another embodiment of any of the aspects the heating at the curing temperature is done also in the presence of suitable accelerator and/or activating agent wherein the accelerator is preferably selected from 1,3-diphenylguanidine (DPG), hexametheylenetetramine (HMTA), 2,2'-dithiobis(benzothiazole) (MBTS), tetramethylthiuram disulfide (TMTD), zinc dimethyl dithiocarbamate (ZDMC) and wherein the activating agent is preferably selected from ZnO, Zn(acac)₂ and Zn-stearate.

In a preferred embodiment of any of the aspects the linker group is an ester group and wherein the lignin esterified with unsaturated fatty acid obtained by
I. Providing lignin, free unsaturated fatty acid and an esterification agent or unsaturated and/or polyunsaturated fatty acid halide and optionally a catalyst;
II. Preferably mixing the lignin, the free unsaturated fatty acid and an esterification agent or unsaturated and/or polyunsaturated fatty acid halide and optionally the catalyst preferably followed by a reduction in pressure, where after the catalyst and the esterification agent is added;
III. Allowing the free fatty acid and the esterification agent or the unsaturated and/or polyunsaturated fatty acid halide to esterify the lignin in the presence of the catalyst at an elevated temperature;
IV. Preferably removing catalyst and preferably also bi-products.

In a preferred embodiment of any of the aspects the method comprises providing lignin, a catalyst, free unsaturated fatty acid and an esterification agent wherein the esterification agent is an anhydride preferably acetic anhydride; wherein the catalyst preferably is an esterification catalyst, preferably a nitrogen containing aromatic heterocycles preferably selected from N-methyl imidazole, pyridine, 4-methylpyridine and 4-dimethylaminopyridine (DMAP).

In a preferred embodiment of any of the aspects the method comprises providing lignin and unsaturated fatty acid halide and wherein the esterification is done preferably in the presence of a base.

In a preferred embodiment the elevated temperature is 120-220°C, preferably 140-190°C, more preferably 150-180°C.

In a preferred embodiment of any of the aspects the catalyst is removed by evaporation.

In a preferred embodiment of any of the aspects the linker group is selected from the group of ether, ester, ketone, acetal, methylene, methyne, olefin, amide, thioester, thioether, imide, imide amide, carbamate, carbamothioic acid, sulfonyl, sulfonamide, silyl oxy, silyl ether, phenoxide, furan, phosphorous acid, quaternary ammonium or hetero cycles, preferably ether or ester, more preferably ester.

In a preferred embodiment of any of the aspects the lignin is selected from Kraft lignin or lignin obtained from black liquor, organosolv lignin, acetosolv, steam exploded lignin or sulfonated lignin, preferably Kraft lignin or lignin obtained from black liquor, more preferably precipitated Kraft lignin or organosolv lignin.

In one embodiment of any of the aspects the fatty acids of the functionalized lignin are derived from one or more, or two or more, of linseed oil, brazil nut oil, rapeseed oil, palm oil, palm kernel oil, coconut oil, carinata oil, cotton seed oil, olive oil, butter, peanut oil, safflower oil, soybean oil, corn oil, tall oil, sunflower oil, canola oil, avocado oil, used cooking oil or animal or fish fat such as tallow, schmaltz or lard or fish oil, or soap stock, acidulated soap stock, or fat from microorganisms such as bacteria and algae.

In one embodiment of the second aspect the method is for preparing a material of the present invention.

In one embodiment according to any of the aspects the amount of fibres is 15-30wt%.

All embodiments are applicable to all aspects and may be combined unless stated otherwise.

### BRIEF DESCRIPTION OF THE FIGURES

Figure 1, schematic view of the formation of the material of the present invention.
Figure 2, stress-strain curve of materials according to the present invention.
Figure 3a, illustration of dog bone.
Figure 3b, illustration of mould for making dog bone.
Figure 4a, illustration of the method of the present invention.
Figure 4b, illustration of the method of the present invention.

### DETAILED DESCRIPTION OF THE INVENTION

In the present application the term "lignin" means a polymer comprising coumaryl alcohol, coniferyl alcohol and sinapyl alcohol monomers.

In the present application the terms "weight%" and "wt%" denotes the same thing and are used interchangeably.

In the present application the term "unsaturated fatty acid" encompasses monounsaturated fatty acids and polyunsaturated fatty acids.

In the present application the term "compatibilizer" denotes a compound that promotes adhesion between polymers which otherwise are less compatible. Compatibilizers are widely used to increase the miscibility of otherwise immiscible polymers or polymers that do not mix so well.

In the present invention "sulphur containing vulcanization compound" and "vulcanization compound" denotes the same thing.

In the present invention "free fatty acid" or "free fatty acids" denotes fatty acids that are not bound to lignin or triglyceride.

Triglycerides are esters of glycerol and three fatty acids and are commonly found in in fat and oil. The fatty acids may be saturated or unsaturated and the three fatty acids of a triglyceride may be identical or different fatty acids regarding chain length and degree of saturation.

When calculating number of repeating units and equivalents one repeating unit of lignin is assumed to be 180 Da. The number of hydroxyl groups in the lignin is measured and calculated by preparing three stock solutions according to prior art and measured using phosphorus NMR (³¹PNMR), Varian 400MHz. On average each monomer unit contains between 1 to 1.17 hydroxyl groups.

Molecular weight in the present application is determined using GPC (Gel Permeation Chromatography) operated at 20°C and at flow rate of 1 ml/min using THF as solvent. Polystyrene Standard RedayCal Set M(p) 250-70000 (16 standards) (Sigma product no: 76552). The colons are Styragel THF (pre-colon), Styragel HR 3 THF (7.8x300 mm), Styragel HR 1 THF (7.8x300 mm), Styragel HR 0.5 THF (7.8x300 mm) all from Waters.

Amounts of and weight ratios between saturated, monosaturated and polyunsaturated may be determined using any suitable technique such as gas chromatography (GC) equipped with a flame ionization detector or GC mass spectrometry (GC-MS).

### The material

The material according to the present invention is a material obtainable by vulcanization of functionalized lignin and triglyceride. The material may be a thermoset but is preferably an elastomer. The lignin of the present material is functionalized with unsaturated fatty acids via a linker group preferably selected from ether, ester, ketone, acetal, methylene, methyne, olefin, amide, thioester, thioether, imide, imide amide, carbamate, carbamothioic acid, sulfonyl, sulfonamide, silyl oxy, silyl ether, phenoxide, furan, phosphorous acid, quaternary ammonium or hetero cycles. Preferably the lignin is functionalized via an ester or an ether group. WO2016204672, WO2015094099 and WO2016072915 disclose methods of preparing functionalized lignin and are hereby incorporated by reference.

Lignin according to the present invention may be any suitable lignin but is preferably selected from Kraft lignin or lignin obtained from black liquor, organosolv lignin, acetosolv, steam exploded lignin or sulfonated lignin, preferably Kraft lignin or lignin obtained from black liquor, more preferably precipitated Kraft lignin, more preferably acid precipitated Kraft lignin or organosolv lignin. Kraft lignin has the advantage of being commercially available in large amounts and organosolv lignin has the advantage of being easy to handle and lacks residues found in Kraft lignin.

The lignin of the composition may be functionalized with monounsaturated and/or polyunsaturated fatty acids. In one embodiment 20% or more of the hydroxyl groups of the lignin are functionalized with monounsaturated fatty acids, preferably 30% or more, more preferably 40% or more, but 60% or less, preferably 55% or less, more preferably 45% or less, more preferably 35% or less and at least 30% of the hydroxyl groups are esterified with polyunsaturated fatty acids, preferably at least 40%, more preferably at least 50%, more preferably at least 60%, more preferably at least 80%, more preferably about 100%.

Any suitable linker group may be used to functionalize the lignin with the unsaturated fatty acid. Still, a non-limiting list of suitable linker group is ether, ester, ketone, acetal, methylene, methyne, olefin, amide, thioester, thioether, imide, imide amide, carbamate, carbamothioic acid, sulfonyl, sulfonamide, silyl oxy, silyl ether, phenoxide, furan, phosphorous acid, quaternary ammonium or hetero cycles, preferably ether or ester, more preferably ester.

The lignin is preferably functionalized, preferably esterified, with unsaturated fatty acids via the hydroxyl groups of the lignin to a certain degree of functionalization expressed as number of hydroxyl groups converted. Preferably the degree of functionalization is 35-100%, preferably 40% or more, preferably 45% or more, preferably 50% or more, more preferably 55% or more, more preferably 60% or more, more preferably 65% or more, but 100% or less, preferably 90% or less, or more preferably 80% or less. The hydroxyl groups may be functionalized with other groups such as saturated fatty acids or they may be acetylated. In one embodiment the remaining hydroxyl groups are fully or at least partly acetylated. By having the lignin acetylated reduces the amount of fatty acids needed but at the same time reduces the number of hydroxyl groups on the lignin which otherwise may cause side reactions or unwanted polymerization. The functionalized lignin may comprise free fatty acids, preferably unsaturated fatty acids, in an amount of 0.1-30wt% preferably 1wt% or more, more preferably 5wt% or more, more preferably 10wt% or more, but preferably 25wt% or less, more preferably 20wt% or less. These free fatty acids may be a remaining from the process of preparing the functionalized lignin.

The fatty acids of the functionalized lignin are preferably derived from vegetable oils or used cooking oil or animal or fish fat such as tallow, schmaltz or lard or fish oil, or soap stock, acidulated soap stock, or fat from microorganisms such as bacteria and algae.

Triglycerides are naturally occurring and are renewable which makes them interesting as a compound for preparing renewable materials such as elastomers. Various plants or vegetables but also from animal or fish fat are sources for triglycerides and the present triglycerides are preferably derived from such sources. Triglycerides comprise glycerol and fatty acids and the triglycerides of the present invention comprises unsaturated fatty acids. Unsaturated groups provides sites for crosslinking but affect also the mechanical properties of the obtained material. Therefore, the amount and ratio of unsaturated groups of the fatty acids of the lignin and of the triglyceride may be selected to adapt the mechanical properties. In order to provide sufficient amount of unsaturated groups available for crosslinking the amount of unsaturated fatty acids in the triglycerides should be sufficiently high. In a preferred embodiment at least 20% of the fatty acids of the triglyceride is unsaturated fatty acids, preferably at least 30%, preferably at least 40%, more preferably at least 50%, more preferably at least 60%. Without being bound by theory but elastomeric properties are believed to be a result of using triglycerides having high amount of polyunsaturated fatty acids, preferably at least 30% of the fatty acids of the triglyceride are polyunsaturated fatty acids, more preferably at least 40%, more preferably at least 50%.

A preferred but non-limiting list of triglyceride sources is linseed oil, brazil nut oil, rapeseed oil, palm oil, palm kernel oil, coconut oil, carinata oil, cotton seed oil, olive oil, butter, peanut oil, safflower oil, soybean oil, corn oil, tall oil, sunflower oil, canola oil, avocado oil, used cooking oil or animal or fish fat such as tallow, schmaltz or lard or fish oil, or soap stock, acidulated soap stock, or fat from microorganisms such as bacteria and algae. One advantage of using non-tree oils or fats as source for fatty acids is that they do not contain any rosin which may form solid particles. Using triglycerides from used cooking oil or animal or fish fat makes it possible to produce materials from various waste. An advantage of the present invention is that triglycerides from two or more different sources may be used facilitating tailoring of the properties of the obtained material and also natural and renewable resources may be more efficiently used allowing the use of renewable non-scarcity compounds.

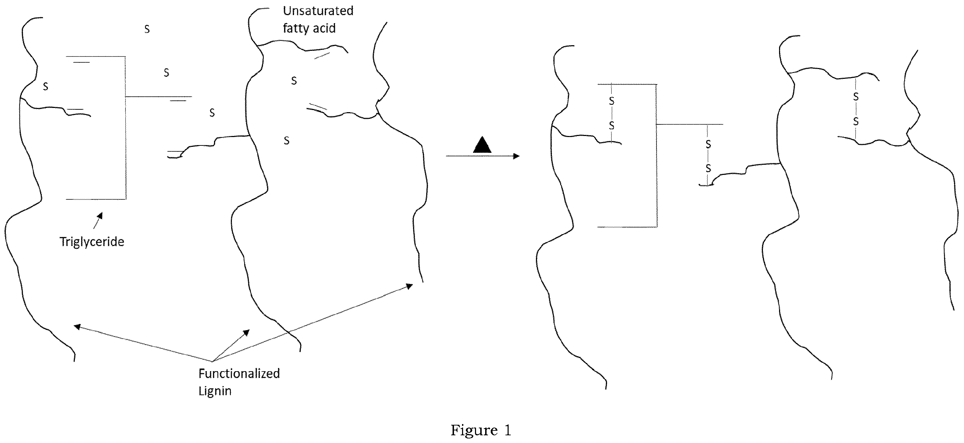

Vulcanization of the functionalized lignin and the triglyceride is done using a sulphur containing vulcanization compound. Said vulcanization compound is preferably selected from elementary sulphur tetramethylthiuram disulfide, N-oxydiethylene-N'-oxydiethylenethiocarbamylsulfonamide, dipentamethylenethiuramtetrasulfide, 2-morpholinodithiobenzothiazole, dithiomorpholine, capralactam disulfide or alkyl phenol disulfide, or a combination of two or more of the vulcanization compounds. During the vulcanization crosslinks are formed between unsaturated groups of the functionalized lignin and the triglyceride. Crosslinks may be formed between unsaturated fatty acids of the functionalized lignin and/or unsaturated fatty acids of the triglyceride via a sulphide chain wherein said chain comprises one or more sulphur atom, for example a -S- chain or a -S-S- chain as illustrated in Figure 1.

The crosslinking density may be varied in order to adapt the mechanical properties by adjusting e.g. the amount of vulcanization compound and/or by selecting the amount or ratio of saturated, mono- and polyunsaturated fatty acids of the functionalized lignin and the triglyceride.

By using fatty acids to functionalize lignin the material becomes essentially renewable. Therefore, in a preferred embodiment the unsaturated fatty acid of the functionalized lignin is derived from natural fatty acids such as fatty acids from plants or animal fat. In order to create a sufficient distance and thereby good mechanical properties the unsaturated fatty acid is preferably a C14 or longer fatty acid, more preferably a C16 or longer fatty acid. Preferred unsaturated fatty acids are myristoleic acid, palmitoleic acid, sapienic acid, oleic acid, linoleic acid, linolenic acid, eicosadienoic acid and docosadienoic acid or a combination thereof and the lignin is preferably functionalized to a degree of functionalization of 35-100%, preferably 40% or more, preferably 45% or more, preferably 50% or more, more preferably 55% or more, more preferably 60% or more, more preferably 65% or more. Oleic acid, linoleic acid or linolenic acids are preferred since they are readily available and are found in vegetable oils. The lignin may further be esterified with saturated fatty acids. These fatty acids are also preferably derived from vegetable oils.

The weight average molecular weight (mass) (M_{w}) of the functionalized lignin according to the present invention may be 30,000 g/mol or less, such as not more than 20,000 g/mol, or not more than 10,000 g/mol, or not more than 5,000 g/mol, or not more than 4,000 g/mol, but preferably higher than 1,000 g/mol, or higher than 1,200 g/mol, or higher than 1,500 g/mol, or higher than 2,500g/mol. In one embodiment the number average molecular weight (Mₙ) of the lignin is between 1,000 and 4,000 g/mol, or between 1,500 and 3,500 g/mol.

In a preferred embodiment 70 weight% of the content in said material is renewable, more preferably at least 80weight%, more preferably at least 90 weight%, more preferably at least 95 weight%, or about 100 weight% or less.

The material according to the present invention may comprise suitable additives well-known to the person skilled in the art such as fillers, compatibilizer, lubricant, softener, plasticiser, anti-degradants, anti-oxidants, colour, scent and so on. Preferred plasticiser is free fatty acids and preferably unsaturated fatty acids. Said free fatty acids may be remaining's from the step of functionalization of the lignin. In one embodiment the material comprises free fatty acids and wherein the amount of free fatty acids in the material is 0.1-25wt%, preferably 1wt% or more, more preferably 5wt% or more, more preferably 10wt% or more, but preferably 25wt% or less, more preferably 20wt% or less. Said free fatty acids are preferably unsaturated fatty acids. Said free fatty acids are believed to provide or contribute to the elastomeric properties seen in the present material. In one embodiment the total amount of additives is less than 20 weight%, or less than 10 weight%, or less than 7 weight%, or less than 5 weight%, or less than 3 weight%, or less than 1 weight% but preferably 0.25 weight% or more, or 0.5 weight% or more. In another embodiment the amount of additive is 3-10 weight%. Still the material may be free or essentially free from any additives such as compatibilizer, lubricants, softener, plasticiser, anti-degradants etc.

Accelerators, activating agents or catalysts used during the preparation may be present in the obtained material. Suitable accelerators are 1,3-diphenylguanidine (DPG), hexametheylenetetramine (HMTA), 2,2'-dithiobis(benzothiazole) (MBTS), tetramethylthiuram disulfide (TMTD), zinc dimethyl dithiocarbamate (ZDMC), benzothiazole-, thiuram-, dithiocarbamate- and guanidine-based and N-cyclohexyl-2-benzothiazole sulfenamide (CBS). Suitable activating agents are zinc oxide (ZnO), zinc fatty acid carboxylate, salts of magnesium or calcium .

Further, the material is preferably essentially free from any catalyst, accelerators and activating agents used during the functionalization or esterification of the lignin and curing of the material. Since many additives are not renewable or environmentally friendly, sometimes even toxic, it is preferred that the amount of additives is as low as possible.

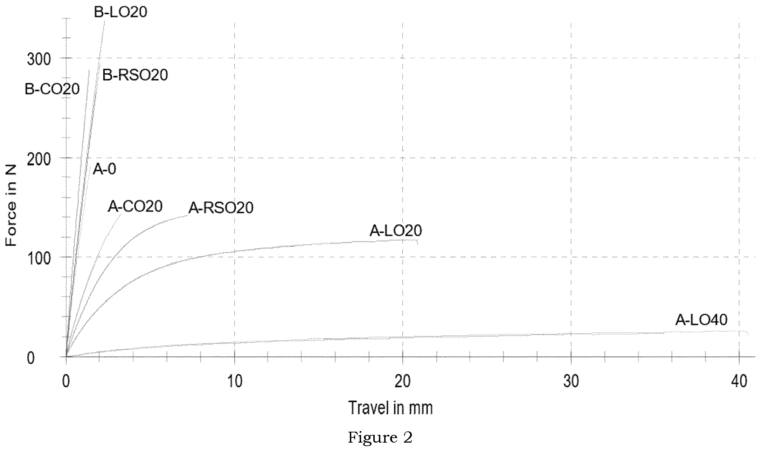

An advantage of the present material is the mechanical properties which may be varied from thermoset properties of being hard but also more elastomeric with a low Youngs modulus and a high elongation at break, Figure 2. As discussed above the present invention makes it possible to adjust the mechanical properties of the material and that the material is renewable.

### The composite

A composite according to the present invention comprises the material according to the invention and fibres and/or particles. Suitable fibres are wood fibres, cellulose fibres, polyester fibres, cotton fibres, glass fibre or carbon fibre or a mixture thereof and the fibres may be in the form of textiles, mats or mesh. They may be woven, non-woven or sprayed. Suitable particles are wood particles.

Depending on the application the amount of fibres or particles may be varied but is preferably at least 5wt%, preferably at least 20wt%, preferably at least 40wt%, more preferably at least 60wt%, more preferably at least 80wt% but preferably less than 95wt%, more preferably less than 85wt%or wherein the amount of particles is preferably at least 50wt%, preferably at least 60wt%, preferably at least 70wt%, more preferably at least 80wt%, but preferably less than 99wt%, more preferably less than 95wt%.

In a fibre composite the fibres are the load bearing part while the material of the present invention acts as a matrix.

### The composition

The composition according to the present invention comprises functionalized lignin, triglyceride and a sulphur containing vulcanization compound where the lignin is at least partly functionalized with unsaturated fatty acids. At least a part of the fatty acids of the triglyceride are unsaturated fatty acids, preferably polyunsaturated fatty acids. As disclosed herein said composition is suitable to form cured or crosslinked solid materials, films or coatings.

An advantage of the present composition is that it forms materials with good mechanical properties, is easy to handle and the obtained material is essentially renewable.

By having the vulcanization compound in the composition and preferably also a suitable accelerator and optionally also an activator the composition may be used directly and may be applied to a surface.

The vulcanization compound may be any suitable type of sulphur or sulphur source that may act as a vulcanization compound sulphur. A non-limiting list iselementary sulphur, tetramethylthiuram disulfide, N-oxydiethylene-N'-oxydiethylenethiocarbamylsulfonamide, dipentamethylenethiuramtetrasulfide, 2-morpholinodithiobenzothiazole, dithiomorpholine, capralactam disulfide or alkyl phenol disulfide or a combination of two or more of the sulphur containing vulcanization compounds.

The amount of vulcanization compound is preferably 0.1-20wt%, preferably, 0.5-15wt%, more preferably 1-10wt% of the total weight of functionalized lignin, triglyceride and vulcanization compound. Higher amounts of vulcanization compound reduce the curing time and is believed to result in more thermally stable materials.

Suitable accelerators are well-known to the skilled person but a non-limiting list is from 1,3-diphenylguanidine (DPG), hexametheylenetetramine (HMTA), 2,2'-dithiobis(benzothiazole) (MBTS), tetramethylthiuram disulfide (TMTD), zinc dimethyl dithiocarbamate (ZDMC), benzothiazole-, thiuram-, dithiocarbamate- and guanidine-based accelerators. A preferred accelerator is N-cyclohexyl-2-benzothiazole sulfenamide (CBS).

A person skilled in the art further knows suitable activators or activating agent and a non-limiting list of such suitable activators is zinc oxide (ZnO), zinc fatty acid ester, salts of magnesium or calcium.

The amount of accelerator in the composition is preferably 0.01 to 5 wt% preferably 1 to 4 wt%. The amount of activator is preferably 0.01 to 5 wt%, preferably 0.5 to 3 wt%.

The composition according to the present invention may comprise suitable additives well-known to the person skilled in the art such as fillers, compatibilizer, lubricant, softener, plasticiser, anti-degradants, anti-oxidants, colour, scent and so on. Preferred plasticiser is free fatty acids and preferably unsaturated fatty acids. Said free fatty acids may be remaining's from the step of functionalization of the lignin. In one embodiment the composition comprises free fatty acids and wherein the amount of free fatty acids in the composition is 0.1-25wt%, preferably 1wt% or more, more preferably 5wt% or more, more preferably 10wt% or more, but preferably 25wt% or less, more preferably 20wt% or less. Said free fatty acids are preferably unsaturated fatty acids and are believed to provide or contribute to the elastomeric properties of the obtained material. In one embodiment the total amount of additives is less than 20 weight%, or less than 10 weight%, or less than 7 weight%, or less than 5 weight%, or less than 3 weight%, or less than 1 weight% but preferably 0.25 weight% or more, or 0.5 weight% or more. In another embodiment the amount of additive is 3-10 weight%. Still the material may be free or essentially free from any additives such as compatibilizer, lubricants, softener, plasticiser, anti-degradants etc.

A surface may be coated using the composition or the composition may be mixed with fibres or particles followed by the curing step as disclosed herein. Any suitable particles or any suitable kind of fibres may be used but preferably wood particles and wood fibres, cellulose fibres, polyester fibres, cotton fibres, glass fibre or carbon fibre or mixtures thereof. The amount of particles is preferably at least 50wt%, preferably at least 60wt%, preferably at least 70wt%, more preferably at least 80wt%, but preferably less than 99wt%, more preferably less than 95wt%. The amount of fibre is preferably at least 5wt%, preferably at least 20wt%, preferably at least 40wt%, more preferably at least 60wt%, more preferably at least 80wt% but preferably less than 95wt%, more preferably less than 85wt%.

The lignin of the composition may be functionalized with monounsaturated and/or polyunsaturated fatty acids. In one embodiment 20% or more of the hydroxyl groups of the lignin are esterified with monounsaturated fatty acids, preferably 30% or more, more preferably 40% or more, but 60% or less, preferably 55% or less, more preferably 45% or less, more preferably 35% or less and at least 30% of the hydroxyl groups are esterified with polyunsaturated fatty acids, preferably at least 40%, more preferably at least 50%.

As disclosed above, in one embodiment wherein the lignin is at least partly functionalized with unsaturated fatty acids via a linker group wherein said linker group is an ester between hydroxyl groups of the lignin and the unsaturated fatty acids and wherein 35-100% of the hydroxyl groups of the lignin have been converted to ester groups, preferably 40% or more, preferably 45% or more, preferably 50% or more, more preferably 55% or more, more preferably 60% or more, more preferably 65% or more, but 100% or less, preferably 90% or less, or more preferably 80% or less. Remaining hydroxyl groups are preferably fully or partly acetylated. In one embodiment 10% or more of the hydroxyl groups of the lignin are acetylated, preferably 20% or more, but 60% or less, preferably 55% or less, more preferably 45% or less, more preferably 35% or less.

The fatty acids of the functionalized lignin are preferably derived from vegetable oils or used cooking oil or animal or fish fat such as tallow, schmaltz or lard or fish oil, or soap stock, acidulated soap stock, or fat from microorganisms such as bacteria and algae.

### Use of the material or the composition

The material, the composite or the composition according to the present invention may be used in any suitable application where a thermoset or an elastomer is needed. A non-limiting list of applications is gasket, particle board, fibre composite, varnish, coating, tire, packaging, panel, insulation, adhesive, sealant, sole, cement or asphalt.

By curing a composition of lignin functionalized unsaturated fatty acid and triglyceride in the presence of fibres such as carbon fibres or glass fibres or in the presence of particles such as wood particles a fibre composite or a particles board may be prepared.

In a preferred embodiment the fibres are selected from wood fibres, cellulose fibres, polyester fibres, cotton fibres, glass fibre or carbon fibre or mixtures thereof. The fibres may be in form of textiles, mats or mesh. They may be woven, non-woven or sprayed. In one embodiment the particles are wood particles.

A coating or laminate comprising the present material or the present composite material may also be prepared. For example the composition or the composite material according to the present invention may be mixed and applied to paper or cardboard where after the mixture is cured as disclosed herein. Coatings and laminates according to the present invention may be very thin with a thickness ranging from 1-10 mm.

The composite material according to the present invention is preferably used in or used as car parts or construction material.

When mixing the present composition with fibres to make a fibre composite any trapped air is preferably removed.

Particle boards may be prepared by mixing the present composition with particles preferably wood particles. A pressure is then applied to the mixture and the mixture is cured during heating. Preferably the amount of particles in the particles board is preferably at least 50wt%, preferably at least 60wt%, preferably at least 70wt%, more preferably at least 80wt%, but preferably less than 99wt%, more preferably less than 95wt%.

The curing is preferably done at 120-200°C, more preferably 140-190°C, more preferably 160-180°C. Pressure may be applied during curing.

The material may have any possible shape or structure and may be used in any product in which a thermoset or an elastomer is needed. As disclosed herein an advantage of the present invention is that products having a three-dimensional shape, unlike films or coatings that are two dimensional, may be prepared. In a preferred embodiment the three-dimensional product has a thickness of more than 1 centimetre, preferably more than 2 centimetres. Products having a more complex structure may be prepared by moulding the composition or composite material.

### Method of preparing a material

The present inventors surprisingly found that lignin could be functionalized with unsaturated fatty acid followed by a polymerization or crosslinking step where the unsaturated fatty acids bound to the lignin react with each other and/or with unsaturated fatty acids of triglycerides in the presence of a sulphur containing vulcanization compound. The obtained material exhibits various properties ranging from thermoset properties to elastomeric properties depending on the starting materials and the amounts used.

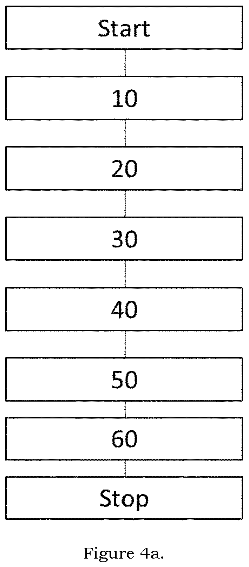

Turning now to figure 4a. A material is generally prepared according to the present method by providing functionalized lignin wherein the lignin is functionalized with unsaturated fatty acid, and triglyceride where at least a part of the fatty acids are unsaturated and a sulphur containing vulcanization compound (20). Functionalization of lignin (10) may be part of the present method and the functionalized lignin may be washed (30). Prior to curing the functionalized lignin may be arranged in a mould or a die having the shape or form of the wanted product or it may be arranged on a surface (40) and the composition is cured or crosslinked (50). Any unwanted compounds such as catalysts, esterification agents, bi-products and so on may be removed prior to, during or after the curing (60). The method comprises the following steps:
Step (10). Optionally, preparing functionalized lignin.

Step (20). Providing functionalized lignin, triglyceride and sulphur containing vulcanization compound, and optionally accelerator and/or activators.

Step (30). Optionally washing the functionalized lignin. Washing removes fatty acids or lower the amount of free fatty acids of the functionalized lignin. Still, the functionalized lignin used in step (40) may comprise free fatty acids and the amount of free fatty acids in the functionalized lignin is preferably 0.1-30wt%, preferably 1wt% or more, more preferably 5wt% or more, more preferably 10wt% or more, but preferably 25wt% or less, more preferably 20wt% or less. Said free fatty acids are preferably unsaturated fatty acids.

Step (40). The provided functionalized lignin, triglyceride and sulphur containing vulcanization compound, and optionally accelerator and/or activators may be arranged in a mould or a die or mixed with other compounds such as polymers or fibres. Obtained mixture may then be arranged into the wanted shape or structure prior to the curing step.

Step (50). The provided mixture of functionalized lignin, triglyceride and sulphur containing vulcanization compound, and optionally accelerator and/or activating agent is then heated or melted to cure the mixture. Alternatively, the vulcanization compound together with optional accelerator and activating agent and optional additives are added during or after the heating or melting. The obtained mixture is then heated at a curing temperature where the curing temperature is preferably 120-200°C, more preferably 140-190°C, more preferably 160-180°C and the heating step at the curing temperature is conducted until a sufficient degree of crosslinking has been reached. The temperature provides sufficiently fast curing without degrading the material.

Any suitable sulphur containing vulcanization compound may be used and is preferably selected from elementary sulphur tetramethylthiuram disulfide, N-oxydiethylene-N'-oxydiethylenethiocarbamylsulfonamide, dipentamethylenethiuramtetrasulfide, 2-morpholinodithiobenzothiazole, dithiomorpholine, capralactam disulfide or alkyl phenol disulfide. Preferably elementary sulphur is used as the vulcanization compound since then the curing is unexpectedly fast and provides a cured material with good mechanical properties. When using elementary sulphur as the vulcanization compound oxygen is preferably present during the curing. It is believed that the oxygen may act as an activator. An advantage of using a sulphur containing vulcanization agent is that it may easily be mixed with the esterified lignin and thereby a better and faster curing may be accomplished. Unlike curing that is dependent on the access to oxygen as the vulcanization compound these vulcanization compounds is not dependent on diffusion and thereby three dimensional products may be produced.

The amount of vulcanization agent is preferably 0.1-20wt%, preferably, 0.5-15wt%, more preferably 1-10wt% of the total weight of functionalized lignin, triglyceride and vulcanization compound. Higher amounts of vulcanization compound reduce the curing time and is believed to result in more thermally stable materials.

Suitable accelerators are well-known to the skilled person but a non-limiting list is from 1,3-diphenylguanidine (DPG), hexametheylenetetramine (HMTA), 2,2'-dithiobis(benzothiazole) (MBTS), tetramethylthiuram disulfide (TMTD), zinc dimethyl dithiocarbamate (ZDMC), benzothiazole-, thiuram-, dithiocarbamate- and guanidine-based accelerators. A preferred accelerator is N-cyclohexyl-2-benzothiazole sulfenamide (CBS). A person skilled in the art further knows suitable activators or activating agents and a non-limiting list of such suitable activators or activating agents is oxygen, zinc oxide (ZnO), zinc fatty acid ester, salts of magnesium or calcium, or combinations thereof, preferably oxygen, zinc oxide, or combinations thereof. These activators or activating agents and combinations of them provides a fast curing.

The amount of accelerator in the composition is preferably 0.01 to 5 wt% preferably 1 to 4 wt%. The amount of activator is preferably 0.01 to 5 wt%, preferably 0.5 to 3 wt%.

Step (60). Purifying during curing. Unwanted compounds such as catalysts or any unwanted bi-products or reagents remaining for example from the esterification reaction may be removed during the curing step. Purifying may be done by applying reduced pressure.

Depending on the thickness of the material heated, the vulcanization compound, the degree of esterification and the presence of any additive the heating at the curing time may vary. In one embodiment the heating at the curing temperature is done for at least 5 minutes, or preferably at least 10 minutes, or at least 30 minutes or at least 1 hour, or at least 2 hours but preferably less than 5 hours. An advantage of the present method is that it can be conducted in air since the oxygen in the air is used in the reaction.

Without being bound by theory but it is believed that during the heating at the curing temperature the vulcanization compound reacts with unsaturated groups of the unsaturated fatty acids of the functionalized lignin and triglyceride and polymerize or crosslink.

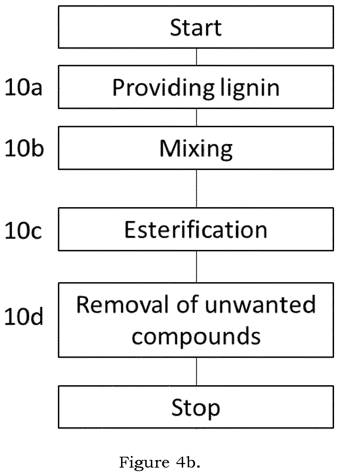

Referring now to Figure 4b. Preparing functionalized lignin (10) encompass esterification of lignin (10a-10d). Esterification of lignin is well-known and may be performed in any suitable way for example by using an esterification agent such as anhydrides or by using fatty acid halides. In general, the esterification of the lignin is done by having the hydroxyl groups on the lignin react with an esterification agent or the fatty acid halide resulting in lignin bound to said agent via the hydroxyl group that has been converted to an ester linkage.

Step (10a). The method of esterifying lignin with the unsaturated fatty acid may be done by providing lignin, preferably a catalyst and, free unsaturated fatty acid and an esterification agent or unsaturated fatty acid halide. Step (10b), mixing of the reagents and preferably the lignin and the free unsaturated fatty acid or unsaturated fatty acid halide are first mixed, preferably followed by a reduction in pressure (preferably 100 mbar or lower, such as 50 mbar or lower, or 20 mbar or lower), where after the catalyst and the esterification agent is added. Step (10c), esterifying the lignin with the free fatty acid and the esterification agent or fatty acid halide in the presence of the catalyst at an elevated temperature. Step (10d). Unwanted compounds such as catalyst, formed bi-products and esterification agent are preferably removed. In one embodiment the unwanted compounds are removed during the curing or crosslinking of the esterified lignin, hence step (40) and (10d) may be the same. Using fatty acid anhydride results in that the lignin is to some extent acetylated.

In one embodiment at least 90 mol% preferably at least 95 mol%, more preferably at least 98 mol% of the catalyst is removed, or more preferably essentially all catalyst is removed.

In one embodiment free saturated fatty acids is also present during the esterification and the esterified lignin is esterified with saturated fatty acids preferably to a degree of less than 50%, preferably less 40% preferably less than 30%. In one embodiment the degree of esterification with saturated fatty acid is 10-30%. This is common when using mixtures of fatty acids obtained from vegetable oils or fats.

In one embodiment lignin is esterified using an acid halide or anhydride as the esterification agent using well-known protocols. When using acid halide said acid halide is preferably an acid chloride and a catalyst and/or a base may be present during the esterification. Fatty acid halide such as fatty acid chloride may be prepared by using thionyl chloride according to any suitable method. A base is suitable used and preferably triethyl amine. The unsaturated acid halide is preferably oleic acid, linoleic acid halide, linolenic halide eicosadienoic acid halide, docosadienoic acid halide or a mixture thereof. The esterification may be done in a suitable solvent such as dioxane, pyridine or DMF (dimethyl formamide). When using an acid halide the esterification may be done at an elevated temperature of 20-100°C, preferably 40-70°C.

When using anhydride as the esterification agent said agent is preferably acetic anhydride or an unsaturated fatty acid comprising an anhydride group, i.e. a unsaturated fatty acid anhydride. An esterifying catalyst is preferably also used and is preferably a nitrogen containing aromatic heterocycles preferably selected from N-methyl imidazole, pyridine, 4-methylpyridine and 4-dimethylaminopyridine (DMAP). The free unsaturated fatty acid is preferably a mono- or di-unsaturated fatty acid preferably selected from myristoleic acid, palmitoleic acid, sapienic acid, oleic acid, linoleic acid, linolenic acid, eicosadienoic acid, docosadienoic acid, preferably linoleic acid. The esterification when using anhydride may be done at an elevated temperature of 150-220°C, preferably 160-200°C.

Lignin and free unsaturated fatty acid are first mixed preferably during heating, preferably 100-150°C and at reduced pressure, preferably 50mbar or lower. Thereafter the catalyst and the esterification agent e.g. the anhydride, are added and the temperature is raised to the elevated temperature of 150-200°C, preferably 160-190°C. The reaction mixture is allowed to reflux during a suitable period of time before the pressure is reduced again to removing catalyst, formed bi-products and preferably also the esterification agent.

Depending on the ratio between the number of hydroxyl groups on the lignin and the amount of free unsaturated fatty acid or unsaturated fatty acid halide the degree of functionalization or esterification is obtained. The weight ratio between the lignin and the free unsaturated fatty acid is 1:0.3 to 1:5. When using anhydride, the anhydride is preferably used in molar excess to the fatty acid.

The free fatty acids such as the mono- or polyunsaturated fatty acids are preferably derived from vegetable oils or used cooking oil or animal or fish fat such as tallow, schmaltz or lard or fish oil, or soap stock, acidulated soap stock, or fat from microorganisms such as bacteria and algae. Since the fatty acids of vegetable oils are in the form of triglycerides they are hydrolyzed in order to obtain the free fatty acids.

The esterified lignin may be purified by any suitable technique such as evaporation, precipitation, liquid-liquid extraction etc. Preferably the catalyst, bi-products and/or esterification agent are removed at reduced pressure and during heating. The pressure is suitably 100mbar or lower, such as 50mbar or lower, or 20 mbar or lower and the temperature is preferably 150-220°C, more preferably 160-200°C.

In one embodiment at least 90 mol% preferably at least 95 mol%, more preferably at least 98 mol% of the catalyst is removed, or more preferably essentially all catalyst is removed. When the esterification is done by the use of an anhydride the catalyst, excess of acetic anhydride and formed acetic acid is preferably essentially removed by evaporation.

Any additives may be added prior to, during or after the esterification step. The addition may be done using any suitable technique depending on the nature of the additive.

When preparing a composite material of the present material or composition and particles or fibres the composition is prepared as disclosed herein and mixed with particles preferably wood particles or fibres and the obtained mixture is then cured according to the present invention. Fibres are preferably selected from wood fibres, cellulose fibres, polyester fibres, cotton fibres, glass fibre or carbon fibre or mixtures thereof. The fibres may be in form of textiles, mats or mesh. They may be woven, non-woven or sprayed. The amount of fibre is preferably at least 5wt%, preferably at least 20wt%, preferably at least 40wt%, more preferably at least 60wt%, more preferably at least 80wt% but preferably less than 95wt%, more preferably less than 85wt%or wherein the amount of particles is preferably at least 50wt%, preferably at least 60wt%, preferably at least 70wt%, more preferably at least 80wt%, but preferably less than 99wt%, more preferably less than 95wt%. Air is preferably removed before or during the curing using any suitable technique such as reduced pressure.

### EXAMPLES

### Example 1

General procedure of kraft lignin ester preparation: To a 4 L round bottomed flask equipped with a mechanical stirrer was added fatty acid (630 g) and 4-methylpyridine (120 ml), mixture was heated to 60 °C and dry kraft lignin (700.0 g) was added. Temperature was increased to 130 °C and a mixture of acetic anhydride (390.0 g) and 4-methylpyridine (120.0 g) was added over 12 minutes and temperature of oil bath was raised to 190 °C. The reaction was refluxed for 1 h and then pressure was lowered over 1.5 hours to 20 mbar to distil off acetic acid and methylpyridine. Reaction was further continued for 10 min at 20 mbar to afford a homogenous liquid.

### Example 2

The aim was to prepare resin formulations containing kraft lignin ester of linoleic acid (Esterified lignin) with 3 different triglycerides/fats (linoleic, rapeseed and coconut fat) and sulfur. The resins were cured/vulcanised and evaluated with regards to tensile strength and other physical properties. To study the effect of free fatty acids some Esterified lignin were washed prior to mixing with triglyceride.

### Example 3

Washing of Esterified lignin to remove free fatty acids: In a 3 L beaker ethanol (1.3 L) was heated to boiling, powdered Esterified lignin from Example 2 (500.0 g) was added in portions under mechanical stirring. The mixture was refluxed for 6 minutes and cooled to 20 °C to precipitate lignin ester. The solvent was decanted and residue was redissolved in same way two more times in 2×1 L ethanol. The residue was dried with membrane pump to remove most solvent, grinded to fine powder and dried under high vacuum to obtain 310,0 g washed Esterified lignin.

### Example 4

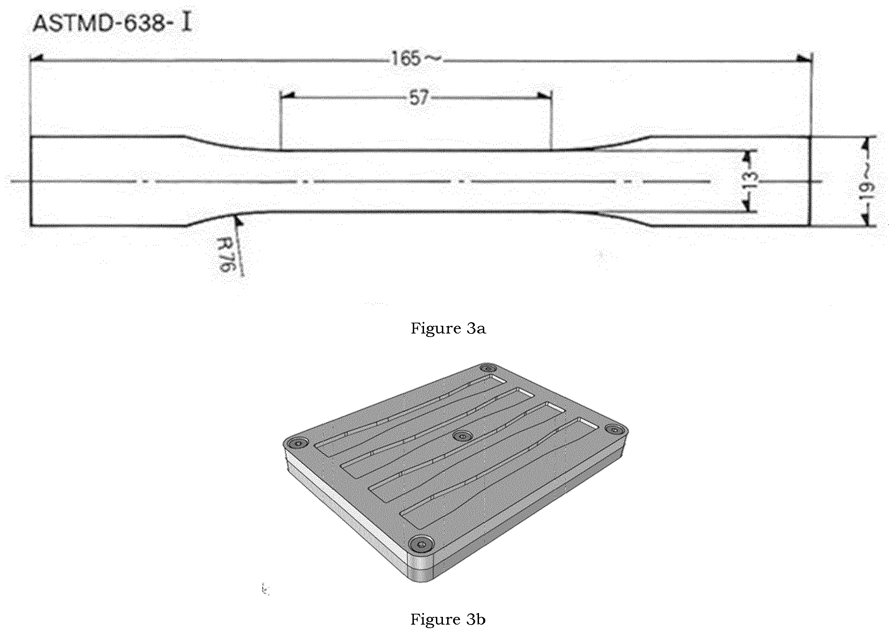

Preparation and curing of resin, 22 g batch: Esterified lignin (95, 75 or 55 wt%) from Example 2 and 3 and triglyceride (0, 20 or 40 wt%) were melted at 150 °C in a beaker, elementary sulphur (5 wt%) was added and the content was mixed until internal temperature reached 130 °C. The triglycerides used were coconut oil (9% unsaturation, 6:3 mono:polyunsaturation), rapeseed oil (92% unsaturation, 62:30 mono:polyunsaturation) and linseed oil (89% unsaturation,23:66 mono:polyunsaturation). After cooling somewhat, the obtained paste was divided into two parts that were loaded into a Teflon dog bone mould (according to ASTM D638-I), Figure 3b. The mould was covered with 1 mm silicone sheet, compressed together between steel plates to obtain an airtight seal, and cured at 160 °C for 22 hours. Table 1 summarizes the prepared materials.

### Example 5

Extraction of the material: A weighed sample of material from Example 3 (1.5 g of B-LO20, B-RSO20 and B-CO20) was divided to small pieces (max 3 mm) and shaken with THF (10 ml) overnight. The obtained slurry was loaded on a column and eluted slowly with THF (total volume 35 ml). After evaporation of solvent the residue was left under high vacuum, results are presented in Table 2.

### Example 6

The resin formulations were prepared according to Example 4 and are presented in Table 1. Tensile properties were evaluated as seen in Figure 2 and Table 1.

**Table 1. The composition of resin. Triglycerides: LO = Linseed oil, RSO = Rapeseed oil, CO = coconut oil, Esterified lignin type: A = raw (contains free fatty acids), B = washed Esterified lignin (see experimental part, Example 2). σ = yield/ultimate strength, E = elastic modulus, ε = elongation at yield.**

| **Sample** | **Trigl.** | **Est. lig. type** | **Esterified lignin (%)** | **Trigl. (%)** | **σ (MPa)** | **E (MPa)** | **ε, tot (%)** |
|---|---|---|---|---|---|---|---|
| A-LO40 | LO | A | 55 | 40 | 0.59 | 4.2 | 66.7 |
| A-LO20 | LO | A | 75 | 20 | 2.76 | 58.8 | 30.4 |
| A-0 | - | A | 95 | 0 | 2.82 | 296.2 | 1.6 |
| A-RSO20 | RSO | A | 75 | 20 | 3.33 | 81.8 | 11.6 |
| A-CO20 | CO | A | 75 | 20 | 2.95 | 128.0 | 4.6 |
| B-LO20 | LO | B | 75 | 20 | 8.12 | 292.3 | 4.0 |
| B-RSO20 | RSO | B | 75 | 20 | 6.75 | 269.0 | 3.3 |
| B-CO20 | CO | B | 75 | 20 | 6.92 | 374.3 | 2.5 |

The swelling and eluation experiments suggest that the more unsaturated triglycerides (LO and RSO) is to a higher degree more chemically bond to the network of the cured material, Table 2.

**Table 2. Extraction of samples with THF.**

| **Sample** | **Extracts (%)** |
|---|---|
| B-LO20 | 16.1 |
| B-RSO20 | 16.2 |
| B-CO20 | 25.8 |

The tensile strength evaluation shows that the elongation increases with increasing concentration of oil (A-LO40, A-LO20 and A-0). Further a clear trend is seen for samples containing residual free fatty acids (A-CO20, A-RSO20 and A-CO20), where elongation decreases according to LO>RSO>CO, Table 2 and Figure 2.

Samples with removed free fatty acid (B-LO20, B-RSO20 and B-CO20) were considerably stiffer and stronger than samples with free fatty acid, Table 2 and Figure 2.

Triglycerides with a higher degree of unsaturation (RSO and LO) are more chemically bond or integrated into the cured polymeric network according to leach-tests.

### Example 6

### Sulfur cured lignin ester composites

A set of sulfur mediated cured fiber and particle composites of lignin linoleate (Esterified lignin), triglycerides and fibers were prepared as disclosed above to evaluate basic strength parameters, such as bending properties. Impact of fiber in the composition was also investigated and the results are summarized in Table 3. Fiber materials used in this study include spruce wood shavings (WS) of with varying dimensions of 0.06-7 mm width, 0.3-30 mm length and 0.06-0.8 mm thickness, Chemi-ThermoMechanical Pulp (CTMP), cotton sheet, cellulose/polyester non-woven fiber (NWF) and glass fiber (GF) woven 300 g/m².

Preparation of pre-curing resin: Kraft lignin ester of linoleic acid (Esterified lignin) was prepared with 100 parts lignin and 90 parts linoleic acid (500 g) together with acetic acid anhydride and methyl pyridine was milled together with sulfur (5.00 g) in a Retsch GM300 mixer at 4000 rpm for 1 minute. The powder was spread on a 32x22 cm tray, heated in an oven at 150 °C for 10 minutes. After cooling the material was once again milled to a powder, stored in a closed container in a fridge and used as is in further experiments.

Preparation of fiber composites: Pre-curing resin from above was melted at 150 °C with triglyceride (rapeseed oil or linseed oil), fibers were added and material was kneaded manually until even distribution of fibers was achieved. The obtained dough was placed into 120x30x4 mm molds, pressed and cured at 150 °C for 22 hours. For materials with long fibers (Cotton, NWF and GF) the pre-curing resin was first dissolved in toluene (1-1.3 parts) at 50 °C, the solution was applied on fibers and subsequently the material was dried under high vacuum over night to remove the solvent. After, the material was loaded into molds and cured as disclosed above.

Comparison of relative bending strength: A cured rod was clutched horizontally in opposite ends between metal plates lined with 2 mm rubber sheets. A length of 20 mm being exposed. One side of metal plate was fixed and the other attached to a vertical wire (38 mm from the center of the rod) connected to a hanging scale. A vertical force was applied until sample was broken or to plastic deformation and the weight was noted.

All samples except Entry 1 and 7 (wood shavings) exhibited plastic deformation. Composites comprising particles (wood shavings, WS) become harder and showed no or only small plastic deformation before breaking.

**Table 3. Fiber composites**

| Entry | Fiber | | Triglyceride | |
|---|---|---|---|---|
| | Type | % | Type | % |
| 1 | WS | 20 | LO | 20 |
| 2 | CTMP | 20 | LO | 20 |
| 3 | Cotton | 20 | LO | 20 |
| 4 | NWF | 10 | LO | 18 |
| 5 | GF | 48 | LO | 20 |
| 6 | Flaxfiber | 20 | LO | 20 |
| 7 | WS | 20 | RSO | 20 |
| 8 | CTMP | 20 | RSO | 20 |
| 9 | Cotton | 20 | RSO | 20 |
| 10 | NWF | 10 | RSO | 18 |
| 11 | GF | 48 | RSO | 20 |
| 12 | Flax fiber | 20 | RSO | 20 |

## Claims

1. A material obtainable by vulcanization of functionalized lignin and triglyceride using a sulphur containing vulcanization compound, wherein the lignin is at least partly functionalized with unsaturated fatty acids via a linker group and wherein at least a part of the fatty acids of the triglyceride are unsaturated.

2. The material according to claim 1 wherein the material comprises crosslinks between unsaturated fatty acids of the functionalized lignin, the triglyceride and/or free unsaturated fatty acids via a sulphide chain wherein said chain comprises one or more sulphur atom.

3. The material according to claim 1 or 2 wherein at least 20% of the fatty acids of the triglyceride is unsaturated fatty acids, preferably at least 30%, preferably at least 40%, more preferably at least 50%, more preferably at least 60%, and preferably at least 30% of the unsaturated fatty acids of the triglyceride are polyunsaturated fatty acids, more preferably at least 40%, more preferably at least 50%.

4. The material according to any one of claim 1 to 3 wherein the lignin is at least partly functionalized with unsaturated fatty acids and wherein at least a part of the unsaturated fatty acids are polyunsaturated, preferably at least 30% of the unsaturated fatty acids are polyunsaturated, more preferably at least 40%, more preferably at least 50%, more preferably at least 60%, more preferably at least 80%, more preferably about 100% and wherein the material comprises free fatty acids and wherein the amount of free fatty acids in the material is 0.1-25wt%, preferably 1-20-wt%.

5. The material according to any one claim 1 to 4 wherein the triglyceride is derived from one or more, or two or more of linseed oil, brazil nut oil, rapeseed oil, palm oil, palm kernel oil, coconut oil, carinata oil, cotton seed oil, olive oil, butter, peanut oil, safflower oil, soybean oil, corn oil, tall oil, sunflower oil, canola oil, avocado oil, used cooking oil or animal or fish fat such as tallow, schmaltz or lard or fish oil, or soap stock, acidulated soap stock, or fat from microorganisms such as bacteria and algae.

6. The material according to any of the preceding claims wherein the weight ratio between the functionalized lignin and the triglyceride is 40-95:60-5, preferably 45-85:55-15, more preferably 55-80:45-20.

7. The material according to any of the preceding claims wherein at least 70 weight% of the material constitutes of functionalized lignin and triglyceride, preferably at least 80weight%, more preferably at least 90weight%, more preferably at least 95 weight%, or about 100 weight%.

8. The material according to claim 1 wherein the linker group is selected from the group of ether, ester, ketone, acetal, methylene, methyne, olefin, amide, thioester, thioether, imide, imide amide, carbamate, carbamothioic acid, sulfonyl, sulfonamide, silyl oxy, silyl ether, phenoxide, furan, phosphorous acid, quaternary ammonium or hetero cycles, preferably ether or ester, more preferably ester.

9. A composite material comprising the material according to claim 1 and fibres or particles.

10. A method of preparing a material comprising:
a) Providing functionalized lignin wherein the lignin is functionalized with unsaturated fatty acids via a linker group;
b) Providing triglyceride and a sulphur containing vulcanization compound;
c) Mixing the functionalized lignin, triglyceride and the sulphur containing vulcanization compound to obtain a mixture;
d) Optionally arranging the mixture in a mould or a die or on a surface; and
e) Heating the mixture at a curing temperature.

11. The method according to claim 10 wherein the sulphur containing
vulcanization compound is selected from elementary sulphur, tetramethylthiuram disulfide, N-oxydiethylene-N'-oxydiethylenethiocarbamylsulfonamide,
dipentamethylenethiuramtetrasulfide, 2-morpholinodithiobenzothiazole, dithiomorpholine, capralactam disulfide or alkyl phenol disulfide or a combination of two or more of the sulphur containing vulcanization compounds and wherein the amount of sulphur containing vulcanization compound preferably is 0.1-20wt%, preferably, 0.5-15wt%, more preferably 1-10wt% of the total weight of functionalized lignin, triglyceride and sulphur containing vulcanization compound.

12. The method according to claim 10 wherein fibres or particles are mixed with the functionalized lignin prior to heating the functionalized lignin at the curing temperature, wherein the fibres are preferably selected from wood fibres, cellulose fibres, polyester fibres, cotton fibres, glass fibre or carbon fibre or a mixture thereof and wherein the particles are preferably wood particles, and wherein the amount of fibres is preferably at least 5wt%, preferably at least 20wt%, preferably at least 40wt%, more preferably at least 60wt%, more preferably at least 80wt% but preferably less than 95wt%, more preferably less than 85wt% or wherein the amount of particles is preferably at least 50wt%, preferably at least 60wt%, preferably at least 70wt%, more preferably at least 80wt%, but preferably less than 99wt%, more preferably less than 95wt%.

13. The method according to claim 10 wherein the triglyceride is derived from one or more, or two or more of linseed oil, brazil nut oil, rapeseed oil, palm oil, palm kernel oil, coconut oil, carinata oil, cotton seed oil, olive oil, butter, peanut oil, safflower oil, soybean oil, corn oil, tall oil, sunflower oil, canola oil, avocado oil, used cooking oil or animal or fish fat such as tallow, schmaltz or lard or fish oil, or soap stock, acidulated soap stock, or fat from microorganisms such as bacteria and algae.

14. A composition for preparing the material according to claim 1 wherein the composition comprises functionalized lignin, triglyceride and a sulphur containing vulcanization compound, wherein the lignin is at least partly functionalized with unsaturated fatty acids via a linker group and wherein at least a part of the fatty acids of the triglyceride are unsaturated.

15. Use of the material according to claim 1 as or in a gasket, particle board, fibre composite, varnish, coating, tire, packaging, panel, insulation, adhesive, sealant, sole, cement or asphalt.

16. The material according to claim 1 wherein the lignin is at least partly functionalized with unsaturated fatty acids via a linker group wherein said linker group is an ester between hydroxyl groups of the lignin and the unsaturated fatty acids and wherein 35-100% of the hydroxyl groups of the lignin have been converted to ester groups, preferably 40% or more, preferably 45% or more, preferably 50% or more, more preferably 55% or more, more preferably 60% or more, more preferably 65% or more, but 100% or less, preferably 90% or less, or more preferably 80% or less; and preferably wherein at least 30% of the unsaturated fatty acids are polyunsaturated, more preferably at least 40%, more preferably at least 50%, more preferably at least 60%, more preferably at least 80%, more preferably about 100%.

17. The material according to claim 16 wherein 10% or more of the hydroxyl groups of the lignin are acetylated, preferably 20% or more, but 60% or less, preferably 55% or less, more preferably 45% or less, more preferably 35% or less.

18. The composite material according to claim 9 wherein the fibres are wood fibres, cellulose fibres, polyester fibres, cotton fibres, glass fibre or carbon fibre or a mixture thereof, and wherein the particles are wood particles.

19. The composite material according to claim 9 wherein the amount of fibres is preferably at least 5wt%, preferably at least 20wt%, preferably at least 40wt%, more preferably at least 60wt%, more preferably at least 80wt% but preferably less than 95wt%, more preferably less than 85wt%or wherein the amount of particles is preferably at least 50wt%, preferably at least 60wt%, preferably at least 70wt%, more preferably at least 80wt%, but preferably less than 99wt%, more preferably less than 95wt%.

20. The method according to claim 10 wherein the lignin is at least partly functionalized with unsaturated fatty acids via a linker group wherein said linker group is an ester between hydroxyl groups of the lignin and the unsaturated fatty acids and wherein 35-100% of the hydroxyl groups of the lignin have been converted to ester groups, preferably 40% or more, preferably 45% or more, preferably 50% or more, more preferably 55% or more, more preferably 60% or more, more preferably 65% or more, but 100% or less, preferably 90% or less, or more preferably 80% or less; and preferably wherein at least 30% of the unsaturated fatty acids are polyunsaturated, more preferably at least 40%, more preferably at least 50%, more preferably at least 60%, more preferably at least 80%, more preferably about 100%.

21. The method according to claim 10 wherein the curing temperature is 120-200°C, preferably 140-190°C, more preferably 160-180°C.

22. The method according to claim 10 wherein at least 20% of the fatty acids of the triglyceride is unsaturated fatty acids, preferably at least 30%, preferably at least 40%, more preferably at least 50%, more preferably at least 60%, and preferably at least 30% of the unsaturated fatty acids of the triglyceride are polyunsaturated fatty acids, more preferably at least 40%, more preferably at least 50%.

23. The method according to claim 10 wherein the heating at the curing temperature is done also in the presence of suitable accelerator and/or activating agent wherein the accelerator is preferably selected from 1,3-diphenylguanidine (DPG), hexametheylenetetramine (HMTA), 2,2'-dithiobis(benzothiazole) (MBTS), tetramethylthiuram disulfide (TMTD), zinc dimethyl dithiocarbamate (ZDMC) and wherein the activating agent is preferably selected from ZnO, Zn(acac)₂ and Zn-stearate.

24. The method according to claim 10 wherein the triglyceride is a mixture of triglycerides prepared by mixing two or more triglycerides derived from linseed oil, brazil nut oil, rapeseed oil, palm oil, palm kernel oil, coconut oil, carinata oil, cotton seed oil, olive oil, butter, peanut oil, safflower oil, soybean oil, corn oil, tall oil, sunflower oil, canola oil, avocado oil, used cooking oil or animal or fish fat such as tallow, schmaltz or lard or fish oil, or soap stock, acidulated soap stock, or fat from microorganisms such as bacteria and algae in order to obtain a mixture of triglyceride wherein at least 20% of the fatty acids of the mixture of triglycerides are unsaturated fatty acids, preferably at least 30%, preferably at least 40%, more preferably at least 50%, more preferably at least 60% and preferably at least 30% of the fatty acids of the triglyceride are polyunsaturated fatty acids, more preferably at least 40%, more preferably at least 50%.
